# EUROPEAN PATENT SPECIFICATION

(11) **EP 3 391 755 B1**
(45) Date of publication and mention of the grant of the patent: **15.07.2020**
(21) Application number: 18171881.8
(22) Date of filing: 30.01.2014
(51) Int. Cl.: A23K 50/75, A23K 50/30, A23K 10/10, A01N 45/00, A23K 20/168, A23K 50/10, A23K 30/10, A23K 50/20, A23K 30/15

(54) **METHODS TO INCREASE SILAGE QUALITY IN CROPS**
VERFAHREN ZUR ERHÖHUNG DER SILAGEQUALITÄT IN NUTZPFLANZENKULTUREN
PROCÉDÉS POUR AUGMENTER LA QUALITÉ D'ENSILAGE DANS DES CULTURES

(30) Priority: 31.01.2013 US 201361759018 P
(43) Date of publication of application: 24.10.2018
(62) Divisional of application: 14746441.6
(73) Proprietor: Valent BioSciences LLC, Libertyville, IL 60048 (US)
(72) Inventor: KAISER, Roger, Libertyville, IL Illinois 60048 (US); SILVERMAN, Paul, Libertyville, IL Illinois 60048 (US); WARGO, Jim, Libertyville, IL Illinois 60048 (US)
(74) Representative: Elkington and Fife LLP

(56) References cited:
- GB-A- 1 583 702
- US-A1- 2004 180 124
- US-A1- 2010 272 853
- BIDLACK J.E. ET AL: "Chemical Regulation of Growth, Yield and Digestibility of Alfalfa and Smooth Bromegrass", JOURNAL OF PLANT GROWTH REGULATION, vol. 14, 1995, pages 1-7, XP009506341, New York

## Description

### FIELD OF THE INVENTION

The present invention is generally directed to methods for increasing the feed quality of silage by the application of an effective amount of at least one gibberellin to a silage crop.

### BACKGROUND OF THE INVENTION

Forages, which are composed of hays and silage are important feedstock for both milk-producing and meat-producing animals. For dairy cattle, about 40 percent of their ration should be forage, and variation in forage digestibility is an important determinant of milk production (Stokes, 2002, Advances in Dairy Technology 14:207).

Silage is produced from forage plants by chopping above-ground plant biomass with a harvester. Suitable plants for silage may be forage crops such as *Zea mays* (corn), cereals, pasture grasses, legumes, such as clover or alfalfa and any other plants suitable for making silage. Silage production is generally optimal when plants are harvested at 30-40% dry matter, which ensures optimal fermentation. The chopped plant material, also known as haylage, is subjected to anaerobic fermentation in a silo, thus preserving its nutrients and nutritional quality.

Nutritional quality of silage is determined by several parameters which are collectively known as digestibility. Digestibility is the relative amount of nutrients (nutritive substances), which are absorbed by the animal after feeding. Parameters that describe the digestibility of forages are Neutral Detergent Fiber (NDF), Acid Detergent Fiber (ADF) and Total Digestible Nutrients as percent of Dry Matter (TDN).

Neutral Detergent Fiber ("NDF") is a measure of fiber after digestion in a neutral detergent as an aid in determining quality and digestibility of forages. High NDF is desirable.

Acid Detergent Fiber ("ADF") is the less digestible portion of the forage, containing cellulose, lignin and heat damaged protein. ADF is closely related to the digestibility of forages. Lower ADF implies the forage is more digestible. A low concentration of ADF is desirable.

Total Digestible Nutrients as percent of Dry Matter ("TDN") is the total amount of digestible nutrients measured by the available energy of the forage and energy requirements of animals. This is a measure of forage digestibility. A high TDN is desirable.

"Starch" describes the starch content of the forage, along with digestible components of the fiber. Starch is the majority of energy in some forages, such as *Zea mays* (corn). A higher starch content is desirable.

Dry Matter ("DM") is the total weight of forage minus the weight of water in the forage, expressed as a percentage.

Many approaches have been taken to increase the digestibility or quality of silage but most rely on agronomic factors. Forage quality is influenced by species selection, level of fertilization, maturity of the crop, plant part selected and, in corn, the relative development of the ear. Plant breeding of forages for example, has focused on lignin content which is a quality factor that is a negative indicator for forage digestibility. Genetic improvement to decrease lignin content was postulated to increase digestibility of forages, but it resulted in significant yield decreases (Pedersen, et al., 2005, Impact of reduced lignin on plant fitness Crop Sci. 45:812).

Accordingly, there is a need for improved methods to increase the feed quality of silage. In the past, plant growth regulators have been tested for their ability to improve silage quality. In Bidlack and Buxton (1995; J. Plant Growth Regul. 14:1-7), GA3 was tested to determine its ability to alter *in vitro* digestible dry matter ("IVDDM") in forage grasses and legumes. Although GA3 applications showed a dose-dependent increase in growth and dry weight of alfalfa and smooth bromegrass, IVDDM decreased in these same studies. Thus, the authors concluded that GA3 application decreased digestibility of forages and legumes. GB 1 583 702 A discloses a method of treating cereal plants with gibberellins to increase the yield of harvestable grain and US 2004/180124 A1 relates to a method for enhancing productivity of ruminant animals, in particular, selecting corn hybrids of specific endosperm type and NDF content for use as silage. Therefore, there is a need for new methods to increase the feed quality of silage. US 2010/0272853 A1 discloses a method for increasing the milk and/or meat quantity of silage fed-animals by feeding the animals silage prepared from plants treated with strobilurin.

### SUMMARY OF THE INVENTION

In one aspect, the present invention is directed to methods for increasing the feed quality of silage through the application of at least one gibberellin to corn plants at an early vegetative growth stage that begins at germination and ends when the plant is 50% of the mature plant size.

In another aspect, the present invention is directed to a method of increasing the quantity of milk or meat produced by a milk-producing animal or a meat-producing animal comprising: 1) applying at least one gibberellin compound to a corn plant; 2) producing silage from the corn plant; and 3) feeding the milk-producing animal or the meat-producing animal the silage made from the corn plant.

### DETAILED DESCRIPTION OF THE INVENTION

Applicants unexpectedly found increased qualities in meat and milk from animals that were fed silage that had been treated with at least one gibberellin.

In one embodiment, the invention is directed to methods of increasing the quantity of milk or meat produced by a milk-producing animal or a meat-producing animal comprising: 1) applying at least one gibberellin compound to a corn plant; 2) producing silage from the corn plant; and 3) feeding the milk-producing animal or the meat-producing animal the silage made from the corn plant.

In another embodiment, the invention relates to a method of increasing the milk quantity of silage-fed milk-producing animals wherein in step 3) the silage is fed to milk-producing animals.

In an embodiment, the invention relates to a method of increasing the meat quantity of silage-fed meat-producing animals wherein in step 3) the silage is fed to meat-producing animals.

Preferably, the gibberellin is gibberellin 1, gibberellin 3 (GA3), gibberellin 4, gibberellin 7, or a combination thereof. In a more preferred embodiment, the gibberellin is GA3 or a combination of gibberellin 4 and 7. In a most preferred embodiment, the gibberellin is GA3.

In a further embodiment, the milk-producing animal or the meat-producing animal is cattle, sheep, swine, horses, poultry or goats. In a preferred embodiment, the milk-producing animal is cattle, sheep, or goats. In a more preferred embodiment, the milk-producing animal is cattle. In a preferred embodiment, the meat-producing animal is cattle, sheep, swine, horses, poultry or goats. In a more preferred embodiment, the meat-producing animal is cattle.

In an embodiment, an effective amount of at least one gibberellin to be applied to the corn plant is from about 1 to about 30 grams of gibberellin per hectare. In a preferred embodiment, the effective amount is from about 3 to 20 grams of gibberellin per hectare and more preferably from about 6 to 16 grams of gibberellin per hectare. In a most preferred embodiment, the effective amount of gibberellin is from about 8 to 16 grams of gibberellin per hectare. In a preferred embodiment, GA3 is applied at from about 1 to about 30, preferably from about 3 to about 20, from about 6 to about 16, and from about 8 to about 16 grams (from about 3.2 to about 6.4 grams of GA3) per hectare of silage.

In another embodiment, the gibberellin is applied to the plants with at least one herbicide, fungicide, insecticide, fertilizer or plant growth regulator that is not a gibberellin. In a preferred embodiment, the gibberellin is applied with another plant growth regulator.

In another embodiment, the herbicides include but are not limited to, glyphosate, mesotrione, halosulfuron, saflufenacil or dicamba.

In a further embodiment, the fungicides include but are not limited to tetraconazole, metconazole, a strobilurin, or a combined strobilurin-azole product.

In another embodiment, the insecticides include but are not limited to methylparathion, bifenthryn, esfenvalerate, lorsban, carbaryl or lannate.

In yet another embodiment, the foliar fertilizers include but are not limited to CoRoN (available from Helena Chemical), a controlled-release nitrogen, or BioForge (available from Stoller USA), which is largely N,N'-diformyl urea, or other micro nutrient-containing sprays.

In an embodiment, the plant growth regulators include but are not limited to, abscisic acid, aminoethoxyvinylglycine, 6-benzyladenine, jasmonic acid, napthylacetic acid or salicylic acid.

In another embodiment, the invention is directed to methods for improving silage quality of corn plants comprising applying at least one gibberellin to com plants at an early vegetative growth stage that begins at germination and ends when the plant is 50% of the mature plant size. In a preferred embodiment, the gibberellin is gibberellin 1, gibberellin 3 (GA3), gibberellin 4, gibberellin 7, or a combination thereof. In a more preferred embodiment, the gibberellin is GA3 or a combination of gibberellin 4 and 7. In a most preferred embodiment, the gibberellin is GA3.

In a further embodiment, the gibberellin is applied to the corn during V2 - V6 growth stages.

In yet another embodiment, a slow-release application of the gibberellin can be soil applied, either as a soil-directed spray, side-dressing, or in-furrow application at planting. In these applications, the gibberellin can be applied either alone or in combination with at least one herbicide, fungicide, insecticide, fertilizer, or another plant growth regulator. In a preferred embodiment, the gibberellin is applied to the plant or cereal crop by foliar application or application to soil.

Also disclosed is a silage for feeding animals, produced from a plant treated with a gibberellin prior to producing silage, where the treated silage displays increased energy content. Preferably, the silage displays enhanced digestibility.

Gibberellin treatment according to the present invention results in an increase in milk and/or meat quantity of animals fed with silage derived from plants treated with gibberellin prior to producing said silage.

According to the invention, the increase of the milk quantity, compared to the milk quantity obtained after the milk producing animals were fed with silage that was not derived from plants treated with gibberellic acid according to the invention, is at least 1%, preferably at least 1.5%, and more preferably at least 2%.

According to the invention, the increase of the meat quantity, compared to the meat quantity obtained after the meat-producing animals were fed with silage that was not derived from plants treated with gibberellic acid according to the invention, is at least 1%, preferably at least 1.5%, and more preferably at least 2%.

In one embodiment according to the invention, the corn plant is selected from agricultural crops, silvicultural and horticultural plants, each in its natural or genetically modified form ("GM plants"). Such GM plants may have improved properties such as improved stress tolerance and resistance of the plants against biotic and abiotic stress factors such as herbicides, fungi, bacteria, viruses, insects, heat stress, cold stress, drought stress, ultraviolet ray stress and/or salt stress.

In one embodiment of the invention, the silage according to the invention used for increasing the milk quantity, is fed to cattle, preferably lactating dairy cattle.

In one embodiment of the invention, the silage according to the invention used for increasing the meat quantity, is fed to cattle, preferably beef cattle.

The gibberellins according to the invention can be prepared, for example, in the form of directly sprayable solutions, powders and suspensions or in the form of highly concentrated aqueous, oil or other suspensions, dispersions, emulsions, oil dispersions, pastes, dusts, compositions for spreading or granules, and be applied by spraying.

Aqueous spray solutions to be utilized in the present invention generally contain from about 0.01% to 0.5% (v/v) of a surface-active agent.

The surface active agent comprises at least one non-ionic surfactant. In general, the non-ionic surfactant may be any known non-ionic surfactant in the art. Suitable non-ionic surfactants are in general oligomers and polymers. Suitable polymers include alkyleneoxide random and block copolymers such as ethylene oxide-propylene oxide block copolymers (EO/PO block copolymers), including both EO-PO-EO and PO-EO-PO block copolymers; ethylene oxide-butylene oxide random and block copolymers, C2-6 alkyl adducts of ethylene oxide-propylene oxide random and block copolymers, C2-6 alkyl adducts of ethylene oxide-butylene oxide random and block copolymers, polyoxyethylene-polyoxypropylene monoalkylethers, such as methyl ether, ethyl ether, propyl ether, butyl ether or mixtures thereof; vinylacetate/vinylpyrrolidone copolymers; alkylated vinylpyrrolidone copolymers; polyvinylpyrrolidone; and polyalkyleneglycol, including the polypropylene glycols and polyethylene glycols. Other non-ionic agents are the lecithins; and silicone surface active agents (water soluble or dispersible surface active agents having a skeleton which comprises a siloxane chain e.g. Silwet L77.RTM.). A suitable mixture in mineral oil is Atplus™411 F.RTM.

Applicants have referred to corn developmental stages throughout the application as "V" stages. The "V" stages are designated numerically as V1, V2, V3, etc. In this identification system of V(n), (n) represents the number of leaves with visible collars. Each leaf stage is defined according to the uppermost leaf whose leaf collar is visible.

As used herein, "milk" refers to a liquid produced by female mammals. The exact composition of raw milk can vary significantly by species. Generally, it contains high amounts of saturated fat, protein and calcium. Milk can be processed in a great variety of ways, the products of which are called dairy products.

As used herein, "meat" is animal tissue used as food. The term meat typically refers to skeletal muscle and associated fat, but it may also refer to non-muscle organs, including lungs, livers, skin, brains, bone marrow and kidneys.

As used herein, "silage" is a certain type of storage forage. Generally, silage is being made from plants in a process called ensilage. During this process, plants or plant parts undergo anaerobic fermentation converting sugars to acids in the crop material making the forage preservable. Depending on the plants used, other names instead of silage are employed, *e.g.,* oatlage for oats or haylage for alfalfa. Silage is widely used for feeding milk and meat-producing animals such as dairy and beef cattle.

As used herein, "increased energy content" refers to increased nutritional quality of the silage. As previously explained, this nutritional quality is determined by parameters such as NDF, ADF, and TDN and collectively referred to as digestibility.

As used herein, "early vegetative growth stage" refers to the growth stage that begins at germination and ends when the plant is 50% of the mature plant size.

As used herein, "producing silage" means that the plants are chopped/harvested and then the non-growing plant material is then subjected to anaerobic fermentation. The silage of the present invention is prepared for animals to eat.

As used herein, the term "plants" is to be understood as plants of economic importance. They are preferably selected from agricultural crops, silvicultural and horticultural (including ornamental) plants.

As used herein, an "enhanced" or "increased" quality means that the silage has more of the quality than the silage would have had it if it had not been treated by methods of the present invention.

As used herein, "effective amount" refers o the amount of the gibberellin that will increase the quantity of milk or meat produced by a milk-producing animal or a meat-producing animal or improve the quality of silage. The "effective amount" will vary depending on the gibberellin concentration, the plants being treated, the result desired, and the life stage of plants, among other factors. Thus, it is not always possible to specify an exact "effective amount." However, an appropriate "effective amount" in any individual case may be determined by one of ordinary skill in the art.

The disclosed embodiments are simply exemplary embodiments of the inventive concepts disclosed herein and should not be considered as limiting, unless the claims expressly state otherwise.

As used herein, all numerical values relating to amounts, weight percentages and the like are defined as "about" or "approximately" each particular value, namely, plus or minus 10% (±10%). For example, the phrase "at least 5% by weight" is to be understood as "at least 4.5% to 5.5% by weight." Therefore, amounts within 10% of the claimed values are encompassed by the scope of the claims.

The articles "a", "an" and "the" are intended to include the plural as well as the singular, unless the context clearly indicates otherwise.

The following examples are intended to illustrate the present invention and to teach one of ordinary skill in the art how to use the formulations of the invention. They are not intended to be limiting in any way.

### EXAMPLES

Field trials were conducted at various locations. Portions of the field were treated with RyzUp® Smartgrass (40% (w/v) GA3 (available from Valent BioSciences Corporation), while other parts of the field were not treated. RyzUp® Smartgrass applications were limited to applications between V3 and V6, with spray volumes for foliar applications ranging from 10-25 gallons/acre.

Trials were harvested using commercial equipment at standard timings for corn silage. Both RyzUp® Smartgrass and untreated areas of the field were harvested separately in order to obtain biomass yield (ton/acre). Subsequently, the harvested plant material was used for producing silage.

Representative samples were taken for subsequent analysis. Forage was analyzed by standard methods to determine quality parameters including dry matter, crude protein, Acid Detergent Fiber (ADF), Neutral Detergent Fiber (NDF), and starch data. Calculations were included for moisture, adjusted crude protein, Total Digestible Nutrients (TDN), Net Energy for Lactation (NEL), Net Energy for Gain (NEG) and protein solubility. This information was then entered into the MILK 2006 University of Wisconsin Com Silage evaluation system. Calculations of the milk production, energy content and digestibility per ton of corn biomass were carried out using a calculation method described in the following references: Schwab, E. C., and R. D. Shaver. (2001); b) Schwab, EC et al. (2003); and c) Undersander, DJ et al.,(1993)

### Example 1

Modem corn hybrid varieties were grown in a field trial. RyzUp® Smartgrass (40% GA3) was applied at V4 growth stage at a rate of 3.2 g GA3/acre (8 g/ha). In this trial, silage quality data were analyzed for each variety and the means were used to calculate milk production (Table 1). Percent moisture, crude protein, ADF and NDF were decreased while TDN, starch, and milk production were increased.

| Table 1: Mean Silage quality parameters from corn silage | | | |
|---|---|---|---|
| Parameter | Control | RyzUp® Smartgrass | Percent Difference |
| % Moisture | 64.26 | 61.57 | -4.2 |
| Wet Tons | 20.57 | 19.76 | -3.9 |
| %CP | 10.27 | 8.50 | -17.2 |
| %ADF | 22.10 | 21.42 | -3.1 |
| %NDF | 42.76 | 41.60 | -2.7 |
| %Lignin | 56.76 | 55.31 | -2.6 |
| %TDN | 68.33 | 69.17 | 1.2 |
| %Starch | 27.50 | 32.08 | 16.7 |
| %Ash | 3.70 | 3.22 | -13.0 |
| %Fat | 2.34 | 2.44 | 4.3 |
| Milk (lbs/t) | 3078.00 | 3158.00 | 2.6 |

As is seen in Table 1, gibberellic acid treatment increased the digestibility (%TDN % of DM by +1.2%), the energy content (% NDF by -2.7%; a decrease in % NDF results in an increase of energy content); the starch by +16.7%, and the calculated milk production per ton of silage by +2.6%.

### Example 2

Corn grown in a field trial was treated at the V5 stage with RyzUp® Smartgrass (GA3 (w/v) 40%) at a rate of 6.4 g GA3/acre (16 g/ha). Treatments were made in a spray volume of 15 gallons of water per acre with added surfactant. The overall conditions of this trial were drought stress both before and following application.

| Table 2: Silage quality parameters from corn trial. | | | |
|---|---|---|---|
| Parameter | Control | RyzUp® Smartgrass | Percent Difference |
| % Moisture | 65.00 | 59.10 | -9.1 |
| %DM | 35.00 | 40.90 | 16.9 |
| %CP | 10.20 | 9.30 | -8.8 |
| %ADF | 27.80 | 22.40 | -19.4 |
| %NDF | 45.60 | 37.50 | -17.8 |
| %TDN | 67.90 | 73.30 | 8.0 |
| % Starch | 24.20 | 37.60 | 55.4 |
| %Ash | 4.10 | 2.40 | -41.5 |

As is seen in Table 2, gibberellic acid treatment increased the digestibility (%TDN by +8 %), the energy content (% NDF) by -17.8% (a decrease in % NDF results in an increase of energy content); and the starch by +55.4%. In this example, the changes in all of these parameters characterize silage with enhanced digestibility, which will yield more milk or meat per ton of silage.

## Claims

1. A method of increasing the quantity of milk or meat produced by a milk-producing animal or a meat-producing animal comprising: 1) applying at least one gibberellin compound to a corn plant; 2) producing silage from the corn plant; and 3) feeding the milk-producing animal or the meat-producing animal the silage made from the corn plant.

2. The method of claim 1 wherein the gibberellin is selected from the group consisting of gibberellin 1, gibberellin 3, gibberellin 4, gibberellin 7, and a combination thereof.

3. The method of claim 2 wherein the gibberellin is gibberellin 3 or a combination of gibberellin 4 and 7.

4. The method of claim 1 wherein the milk-producing animal or the meat-producing animal is selected from the group consisting of cattle, sheep, swine, horses, poultry and goats.

5. The method of claim 4 wherein the animal is cattle.

6. The method of claim 1 wherein the gibberellin is applied with at least one herbicide, fungicide, insecticide, fertilizer or plant growth regulator that is not a gibberellin.

7. The method of claim 6 wherein the gibberellin is applied with a plant growth regulator other than a gibberellin.

8. A method of improving silage quality of corn plants comprising applying at least one gibberellin to corn plants at an early vegetative growth stage that begins at germination and ends when the plant is 50% of the mature plant size.

9. The method of claim 8 wherein the gibberellin is applied to the corn plants during V2 - V6 growth stages.

10. The method of claim 8 wherein the gibberellin is applied by foliar application or application to soil.

## Patentansprüche

1. Verfahren zur Steigerung der durch ein milchgebendes Tier oder ein Tier für die Fleischerzeugung produzierten Milch- oder Fleischmenge, wobei das Verfahren folgendes umfasst: 1) Applizieren mindestens einer Gibberellinverbindung auf eine Maispflanze; 2) Erzeugen von Silofutter aus der Maispflanze; und 3) Verfüttern des aus der Maispflanze hergestellten Silofutters an das milchgebende Tier oder Tier für die Fleischerzeugung.

2. Verfahren nach Anspruch 1, wobei das Gibberellin ausgewählt ist aus der Gruppe bestehend aus Gibberellin 1, Gibberellin 3, Gibberellin 4, Gibberellin 7 und einer Kombination daraus.

3. Verfahren nach Anspruch 2, wobei das Gibberellin Gibberellin 3 oder eine Kombination aus Gibberellin 4 und 7 ist.

4. Verfahren nach Anspruch 1, wobei das milchgebende Tier oder das Tier für die Fleischerzeugung ausgewählt ist aus der Gruppe bestehend aus Rindern, Schafen, Schweinen, Pferden, Geflügel und Ziegen.

5. Verfahren nach Anspruch 4, wobei das Tier ein Rind ist.

6. Verfahren nach Anspruch 1, wobei das Gibberellin mit mindestens einem der folgenden appliziert wird: einem Herbizid, einem Fungizid, einem Insektizid, einem Düngemittel oder einem Pflanzenwachstumsregler, bei dem es sich nicht um Gibberellin handelt.

7. Verfahren nach Anspruch 6, wobei das Gibberellin mit einem anderen Pflanzenwachstumsregler als Gibberellin appliziert wird.

8. Verfahren zur Verbesserung der Qualität von Silofutter aus Maispflanzen, umfassend das Applizieren mindestens eines Gibberellins auf Maispflanzen in einem frühen vegetativen Wachstumsphase, die während der Keimung beginnt und endet, wenn die Pflanze 50% der ausgewachsenen Pflanzengröße erreicht hat.

9. Verfahren nach Anspruch 8, wobei das Gibberellin während den Wachstumsphasen V2 - V6 auf die Maispflanzen appliziert wird.

10. Verfahren nach Anspruch 8, wobei das Gibberellin durch Blattapplikation oder Erdapplikation appliziert wird.

## Revendications

1. Procédé pour augmenter la quantité de lait ou de viande produite par un animal producteur de lait ou un animal producteur de viande, comprenant les étapes consistant à : 1) appliquer au moins un composé de gibbérelline à un dragonnier balsamique ; 2) produire de l'ensilage à partir du dragonnier balsamique ; et 3) alimenter l'animal producteur de lait ou l'animal producteur de viande avec l'ensilage produit à partir du dragonnier balsamique.

2. Procédé selon la revendication 1, la gibbérelline étant choisie dans le groupe constitué par la gibbérelline 1, la gibbérelline 3, la gibbérelline 4, la gibbérelline 7 et une combinaison de celles-ci.

3. Procédé selon la revendication 2, la gibbérelline étant la gibbérelline 3 ou une combinaison de gibbérelline 4 et 7.

4. Procédé selon la revendication 1, l'animal producteur de lait ou l'animal producteur de viande étant choisi dans le groupe constitué par les bovins, les ovins, les porcins, les chevaux, la volaille et les chèvres.

5. Procédé selon la revendication 4, l'animal étant des bovins.

6. Procédé selon la revendication 1, la gibbérelline étant appliquée avec au moins un herbicide, fongicide, insecticide, engrais ou régulateur de croissance des plantes qui n'est pas de la gibbérelline.

7. Procédé selon la revendication 6, la gibbérelline étant appliquée avec un régulateur de croissance des plantes autre que la gibbérelline.

8. Procédé d'amélioration de la qualité de l'ensilage des dragonniers balsamiques comprenant l'étape consistant à appliquer au moins une gibbérelline aux dragonniers balsamiques à un stade précoce de croissance végétative qui commence à la germination et se termine lorsque la plante a atteint 50 % de la taille de la plante mature.

9. Procédé selon la revendication 8, la gibbérelline étant appliquée aux dragonniers balsamiques pendant les stades de croissance V2-V6.

10. Procédé selon la revendication 8, la gibbérelline étant appliquée par application foliaire ou par application au sol.
